# EUROPÄISCHE PATENTANMELDUNG

(11) **EP 1 225 435 A2**
(43) Veröffentlichungstag der Anmeldung: **24.07.2002**
(21) Anmeldenummer: 02001219.1
(22) Anmeldetag: 17.01.2002
(51) Int. Cl.: G01M 17/02

(54) **Reifenprüfeinrichtung und Reifenprüfverfahren**

(30) Priorität: 19.01.2001 DE 10102232
(71) Anmelder: Dengler, Stefan, 75365 Calw-Stammheim (DE)
(72) Erfinder: Dengler, Stefan, 75635 Calw-Stammheim (DE)
(74) Vertreter: Patentanwälte Rüger, Barthelt & Abel

(57) **Zusammenfassung**

Die erfindungsgemäße Prüfeinrichtung für elastische Hohlkörper, wie Reifen (3) oder dgl. ist dazu eingerichtet, die Reifen oder anderweitigen Hohlkörper auf Fehler verschiedener Fehlerklassen zu prüfen. Reifen (3) können dabei auf ihrer Felge (2) verbleiben. Der Innenraum (4) des Reifens steht unter Überdruck oder wird mit einem solchen beaufschlagt. Um den Reifen zu prüfen, wird er in einem Belastungstest zwei unterschiedlichen Belastungen unterworfen. In einer ersten Belastungsstufe werden ein Reifeninnendruck und ein Außendruck eingestellt, die eine erste Druckdifferenz Δp ergeben. In einer zweiten Belastung werden der Reifeninnendruck und der Reifenaußendruck so verändert, dass die Druckdifferenz Δp2 gegenüber der ersten Druckdifferenz Δp1 deutlich verändert ist. Weil sowohl der Reifeninnendruck als auch der Reifenaußendruck verändert werden, ergeben sowohl Laminierungsdefekte als auch Strukturdefekte Verformungen der Reifenoberfläche. Diese werden mit einer geeigneten Messeinrichtung, bspw. mit einem interferometrischen oder sonstigen optischen Messkopf (23) erfasst.

## Beschreibung

Die Erfindung betrifft eine Prüfeinrichtung für hohle, elastische Gegenstände, insbesondere Fahrzeugreifen, sowie ein Verfahren zum Prüfen solcher Gegenstände bzw. Reifen.

Bei der Herstellung, Wartung, Runderneuerung oder bei anderen Gelegenheiten wird es häufig gewünscht, Reifen darauf zu überprüfen, ob sie fehlerhaft sind oder nicht. Reifen können dabei versteckte Fehler aufweisen, die nach außen hin nicht ohne weiteres sichtbar sind. Der Reifen weist als Festigkeitsträger einen Gewebeunterbau (Karkasse) auf, der nach innen hin mit einer luftdichten Gummischicht und nach außen hin mit dem äußerlich sichtbaren Gummi des Reifens versehen ist. Zu diesem gehören Seitengummi und Lauffläche. Unter derselben kann ein sogenannter Gürtel aus Stahlgewebe oder textilem Gewebe untergebracht sein.

Bei der Benutzung eines Reifens können durch mechanische Einwirkung und/oder durch Alterung Fehler, d.h. verdeckte Beschädigungen insbesondere der Karkasse der Seitenwand auftreten. Weitere Beschädigungen oder Fehler können sich beim Runderneuern ergeben. Beispielsweise kann es zu Laminationsfehlern kommen, bei denen stellenweise die Verbindung zwischen Karkasse und äußerem Gummi verloren geht oder unterbrochen ist. Beide Fehlerarten sind von außen meist nicht ohne weiteres erkennbar.

Zur Untersuchung von Reifen auf verdeckte Fehler sind verschiedene Verfahren in Gebrauch, die letztendlich darauf beruhen, die Verformungseigenschaften des Reifens zu testen. Beispielsweise ist aus der DE 196 08 528 A1 ein Verfahren zur Ermittlung von Unregelmäßigkeiten in der Struktur oder Anordnung von Festigkeitsträgern in dehnbaren Bereichen eines Fahrzeugluftreifens bekannt. Bei diesem Verfahren soll der Innenluftdruck oder der Außenluftdruck des Reifens geändert und die sich ergebende Verformung durch ein optisches Messverfahren sichtbar gemacht werden. Zur Durchführung des Verfahrens wird der Reifen auf einer Aufnahmeeinrichtung so gelagert, dass sein Innenraum abgeschlossen und mit Überdruck beaufschlagt werden kann. Während der Außendruck konstant gehalten wird, wird der Innendruck geändert und die Verformung des Reifens registriert.

Es hat sich gezeigt, dass sich mit diesem Verfahren nicht alle möglicherweise vorhandenen Reifenfehler mit Sicherheit erfassen lassen.

Aus der DE 42 31 578 ist darüber hinaus ein interferometrisches optisches Verfahren bekannt um Reifenverformungen anzuzeigen um Reifen zu prüfen. Um den Reifen zu verformen kann ein nicht auf einer Felge montierter Reifen Umgebungsdruckunterschieden ausgesetzt werden, wodurch ergleichmäßig, d.h. innen und außen druckentlastet wird. Dies ruft Verformungen insbesondere von solchen Bereichen der Reifenseitenwand hervor, die Lufteinschlüsse enthalten. Außerdem kann er durch mechanischer Einwirkung verformt werden.

Auch dieses Verfahren macht nicht alle in dem Reifen möglicherweise verborgenen Fehler zuverlässig sichtbar.

Weiter ist es aus der DE 197 48 544 C1 bekannt, einen Reifen auf einer Lager- bzw. Aufnahmevorrichtung so aufzunehmen, dass sein Innenraum abgeschlossen und mit Überdruck beaufschlagt werden kann. Zusätzlich weist die Vorrichtung eine Haube auf, die den Reifen gegen die Umgebung abschließt. Die Vorrichtung ist darauf eingerichtet, sowohl den Innendruck des Reifens als auch den Außendruck kontrolliert zu ändern, und zwar gleichsinnig und um den gleichen Betrag. Dadurch bleibt die Druckdifferenz Δp zwischen Innendruck und Außendruck konstant, so dass der Prüfling seine Form nicht ändert. Lufteinschlüsse in der Wand des Prüflings (Reifens) bewirken jedoch eine lokale Verformung und werden somit optisch erfassbar.

Auch dieses Verfahren zeigt nicht alle möglichen Reifenfehler an - insbesondere ist es unempfindlich gegen Fehler in der Tragstruktur (Karkasse, Festigkeitsträger) des Reifens.

Davon ausgehend ist es Aufgabe der Erfindung, eine Vorrichtung sowie ein Verfahren zum Prüfen von Reifen anzugeben, mit dem sich Reifenfehler mit höherer Sicherheit erfassen lassen.

Diese Aufgabe wird durch die Prüfeinrichtung nach Anspruch 1 und das Prüfverfahren nach Anspruch 15 gelöst.

Die erfindungsgemäße Prüfeinrichtung ist darauf eingerichtet, sowohl den Reifeninnendruck als auch den Außendruck, der auf den Reifen einwirkt, zu beeinflussen. Dazu weist die erfindungsgemäße Prüfeinrichtung eine Einrichtung zur Lagerung des Gegenstands (Reifens) unter Abschluss seines Innenraums auf. Diese Einrichtung kann sowohl eine gesonderte Lagerungseinrichtung, wie bspw. zwei den jeweiligen Reifenrand (Wulst) abschließende Scheiben, sein als auch eine Felge, auf der der Reifen ohnehin montiert ist. Die erste Variante hat den Vorzug, dass bedarfsweise auch der Innenraum des Reifens inspiziert werden kann. Dies ist jedoch nicht unbedingt erforderlich. Bei der bevorzugten Ausführungsform wird der Reifen deshalb auf der Felge geprüft, auf der er zumindest in vielen Fällen ohnehin montiert ist. Das heißt, letztendlich können ganze Räder, wie sie in einer Werkstatt vorhanden sind, in die Prüfeinrichtung gegeben werden.

Bei Anwendungsfällen in denen die Reifen nicht auf Felgen montiert sind, können anderweitige Einrichtungen zur Lagerung des Reifens zur Anwendung kommen oder die betreffenden Reifen vorübergehend auf Felgen montiert werden. In solchen Fällen werden vorzugsweise teilbare Felgen oder anderweitige mehrteilig aufgebaute Halteeinrichtungen verwendet, die mit dem Reifen, wie sonst eine Felge, ein abgeschlossenes Luftvolumen festlegen. Dies erleichtert und beschleunigt die Prüfung von Reifen mit variierendem Innendruck und Außendruck.

Die erfindungsgemäße Prüfeinrichtung weist eine geschlossene Kammer auf, in die der Reifen zur Prüfung verbracht wird. Der Kammerinnendruck und der Reifeninnendruck werden bei der Messung so variiert, dass die Differenz aus dem Kammerdruck und dem Innendruck nicht konstant bleibt. Beispielsweise läuft der Messvorgang in zwei Schritten ab, wobei der Kammerinnendruck im ersten Schritt gleich dem Umgebungsdruck und der Reifeninnendruck gleich einem vergleichsweise höheren Ruheinnendruck ist. Eine z.B. optische Erfassungseinrichtung erfasst die Form des Reifens in diesem Zustand wenigstens' in dem zu prüfenden Bereich. In einem zweiten Schritt wird dann der Außendruck abgesenkt und der Innendruck bspw. erhöht. Dadurch ändert sich die auf die Reifenwand wirkende Druckdifferenz. Vorhandene Lufteinschlüsse können somit aufblähen und eine äußerlich erfassbare lokale Deformation der Reifenwand verursachen. Auf diese Weise sind Laminationsfehler sicher zu erkennen. Durch die Erhöhung des Innendrucks können außerdem Stellen, an denen die Karkasse keine ausreichende Festigkeit aufweist, d.h. beispielsweise gebrochen ist oder kleinere Risse aufweist, nach außen expandieren und somit ebenfalls als Aufwölbungen der Reifenseitenwand (Formänderung) erfasst werden.

Durch die Kombination von Änderung des Außendrucks und Änderung des Innendrucks, und zwar in einem solchen Sinn, dass sich die Druckdifferenz ändert, wird sichergestellt, dass unterschiedliche Fehlerklassen gleichzeitig oder nacheinander zu einer erfassbaren Verformung des Reifens führen und somit letztendlich sichtbar gemacht werden. Die Fehler treten jeweils durch eine von der Reifenaußenseite erfassbare lokale Formänderung in Erscheinung. Es kann davon abgesehen werden, die Reifeninnenseite zu inspizieren. Dadurch wird es möglich, montierte Räder ohne Reifendemontage zu prüfen.

Bei gegensinniger Änderung von Innendruck und Außendruck (Kammerdruck) kann eine größere Verformung des Reifens im Vergleich zu Fällen nach dem Stand der Technik erreicht werden, in denen nur der Innendruck oder nur der Außendruck geändert wird. Es werden somit im Vergleich zu Verfahren, die nur den Innendruck oder nur den Außendruck des Reifens ändern, höhere Signalstärken erreicht. Der Innendruck kann um einen im Vergleich zu der Absenkung des Außendrucks größeren Betrag geändert (erhöht) werden. Damit wird erreicht, dass die lokale Formänderung zufolge von Festigkeitsdefekten der Karkasse und die lokale Formänderung zufolge von Laminierungsfehlern in der gleichen Größenordnung liegt und mit ein und demselben optischen Auswerteverfahren erfassbar wird.

Außerdem wird die Möglichkeit eröffnet, optische Messverfahren zu verwenden, die größere Reifendeformationen benötigen, um sichere Aussagen zu treffen. Solche Verfahren sind z.B. Grauwert-Auswerteverfahren, d.h. Verfahren auf nicht interferometrischer Basis. Diese haben den wesentlichen Vorteil, mit nicht kohärenten Lichtquellen auszukommen, mit denen sich auf einfache Weise hohe Beleuchtungsstärken erzeugen lassen. Dies ist wiederum im Hinblick auf das in der Regel niedrige Lichtreflexionsvermögen von schwarzen Reifen vorteilhaft.

Die Beleuchtung des Reifens mit einer lichtstarken Lichtquelle mit inkohärentem, bspw. weißem, Licht im Rahmen der optischen Erfassung der Verformungen des Reifens durch die genannte Druckbelastung hat den weiteren Vorteil, dass der Reifen zusätzlich durch Bedienpersonal begutachtet werden kann. Auf diese Weise ist es möglich, einige Diskontinuitäten, die keine wirkliche Fehler darstellen, von wirklichen Strukturfehlern zu unterscheiden. Beispielsweise kann auf die Seitenwand aufgeprägte, grobe, dicke Schrift erkannt und einem Signal zugeordnet werden, das die Prüfeinrichtung für diese Stelle ergibt. Fehlanzeigen können so minimiert werden.

Zur Erzeugung einer Absenkung des Außendrucks genügt bei der erfindungsgemäßen Prüfeinrichtung ein Radialgebläse, das eine Druckdifferenz von einigen 10 Millibar erzeugt. Der nötige Unterdruck lässt sich somit auf einfache Weise kostengünstig erzeugen.

Die erfindungsgemäße Prüfeinrichtung erfasst die Formen des Gegenstands (Reifens) in wenigstens zwei unterschiedlichen Lastzuständen. Der erste Lastzustand ist gekennzeichnet durch einen gegenüber dem Umgebungsdruck erhöhten Reifeninnendruck und einen Außendruck, der bspw. mit dem Umgebungsluftdruck übereinstimmt. Er kann jedoch auch gegen den Umgebungsluftdruck erhöht oder verringert sein. Im zweiten Lastzustand sind der Innendruck und der Außendruck geändert, wobei der Innendruck erhöht und der Außendruck bspw. abgesenkt worden ist. Dieser zweite Belastungszustand kann in zwei Teilmessungen aufgeteilt werden, indem bspw. zunächst der Außendruck variiert (bspw. verringert) und danach der Innendruck variiert (z.B. erhöht) wird. Beides kann alternativ auch zeitlich überlappend oder, wie erwähnt, gleichzeitig geschehen. Die bspw. optische Einrichtung zur Erfassung von Formänderungen des Reifens vergleicht die Form des Reifens im zweiten Belastungszustand im Vergleich zu dem ersten Belastungszustand. Die Differenzen werden entsprechend ihrer Größe angezeigt, so dass sich aufwölbende Seitenwandbereiche hervorgehoben dargestellt und manuell oder maschinell erfasst werden. Ist im zweiten Belastungszustand sowohl der Innendruck als auch der Außendruck geändert, werden alle vorhandenen Fehler gleichzeitig erfasst. Wird hingegen das Ändern des Außendrucks und des Innendrucks zeitlich getrennt, können die jeweils erfassten Fehler manuell oder automatisch klassifiziert werden. Bei abgesenktem Außendruck werden insbesondere Laminationsfehler sichtbar und erfassbar. Bei erhöhtem Innendruck werden insbesondere Strukturfehler der Karkasse sichtbar und erfassbar. Sind beide Drücke geändert, werden alle mit diesem Verfahren erfassbaren Fehler sichtbar.

Einzelheiten vorteilhafter Ausführungsformen der Erfindung ergeben sich aus der Zeichnung, Unteransprüchen oder der Beschreibung.

In der Zeichnung ist ein Ausführungsbeispiel der Erfindung veranschaulicht. Es zeigen:
Fig. 1 die erfindungsgemäße Prüfeinrichtung in schematisierter Darstellung,
Fig. 2 die Belastung des Reifens zur Prüfung auf Fehler in Form eines Zeitdiagramms des Außendrucks und des Innendrucks und
Fig. 3 den geprüften Reifen mit unterschiedlichen Fehlern in ausschnittsweise Querschnittsdarstellung.

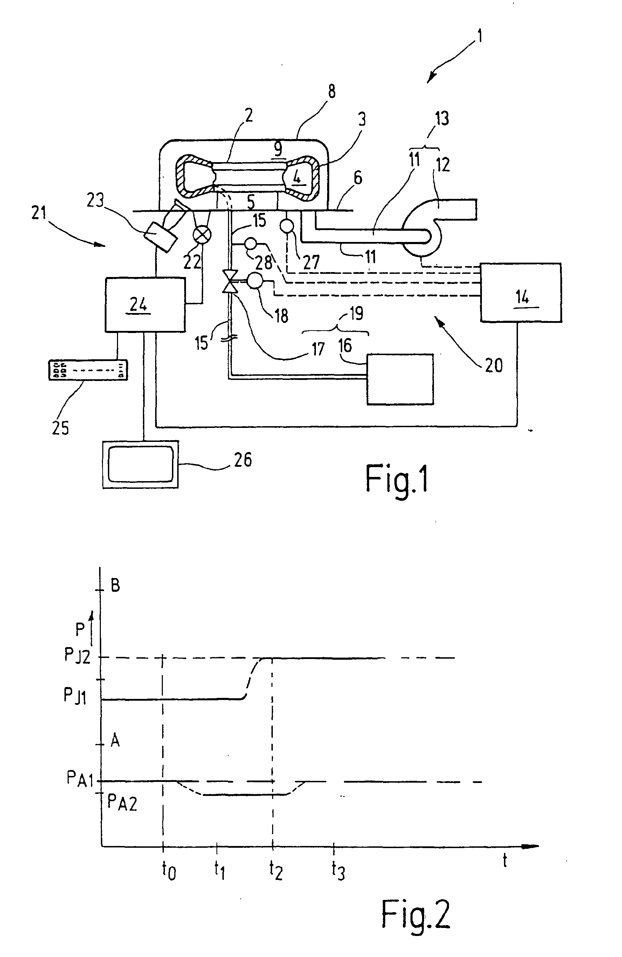

In Fig. 1 ist eine Prüfeinrichtung 1 veranschaulicht, die zur Prüfung von auf Felgen 2 montierten Reifen 3 dient. Die Felge 2 dient dabei als Einrichtung zur Lagerung des Reifens 3. Sie schließt einen von dem Reifen 3 umschlossenen Innenraum 4 als Reifeninnenvolumen ab.

Die Felge 2 ist über eine entsprechende Halteeinrichtung 5 auf einem Tisch 6 gelagert, die somit letztendlich den Reifen 3 ortsfest und erschütterungsfrei trägt. Bedarfsweise kann die Halteeinrichtung 5 mit einer Positioniereinrichtung verbunden oder versehen sein, die eine z.B. schrittweise Drehung der Felge 2 ermöglicht. Bei dem vorgestellten Ausführungsbeispiel der Prüfeinrichtung 1 ist die Felge 2 liegend angeordnet, d.h. ihre Drehachse ist vertikal ausgerichtet. Die Halteeinrichtung 5 kann die Felge 2 um diese Vertikalachse drehen, falls dies erforderlich ist. Alternativ kann die Halteeinrichtung 5 auch horizontal orientiert sein, so dass der Reifen 3 mit horizontaler Drehachse gewissermaßen stehend gemessen wird. Der Reifen 3 ist dabei lediglich von der Felge 2 aufgenommen und wird sonst von keinem Element berührt. Als weitere Alternative kann der Reifen 3 mit der Felge 2 auch auf dem Tisch 6 aufgelegt und auf diese Weise ortsfest gelagert sein.

Anstelle der Felge 2 kann auch eine Halteeinrichtung Anwendung finden, die als geteilte Felge aufgefasst werden kann. Z.B. weist diese geteilte Felge zwei zueinander passende ringförmige Teile auf, die in den Reifen passen und mit diesem ein Luftvolumen abschließen. Die ringförmigen Teile schließen an ihren ringförmigen Seitenflächen luftdicht aneinander an, wenn sie zusammengefahren sind. Werden sie voneinander getrennt, geben sie den Reifen frei, so dass dieser leicht abgenommen werden kann.

Auf dem Tisch 6 ist eine Abdeckhaube 8 angeordnet, die eine Kammer 9 umschließt. Die Abdeckhaube 8 schließt mit ihrem Rand abdichtend an den Tisch 6 an, um die Kammer 9 abzuschließen. In der Kammer 9 ist der Reifen 3 angeordnet. Die Abdeckhaube 8 ist abnehmbar und/oder mit einer entsprechenden verschließbaren Öffnung versehen, um den Reifen 3 und die Felge 2 in die Kammer 9 ein- und ausführen zu können.

Die Kammer 9 ist über eine Leitung 11 mit einer Saugpumpe 12 verbunden. Die Saugpumpe 12 und die Leitung 11 bilden somit eine Einrichtung 13 zur Beeinflussung des Kammerdrucks p_{A} in der Kammer 9. Die Saugpumpe 12 ist bspw. durch ein Radialgebläse gebildet, an dessen Saugseite die Leitung 11 angeschlossen ist. Es ist über einen Elektromotor angetrieben, der von einer Steuereinrichtung 14 ein- und ausgeschaltet und falls erforderlich darüber hinaus bspw. in seiner Drehzahl gesteuert wird. Die Saugpumpe 12 ist dabei zur Erzeugung von relativ geringen Unterdrücken bis etwa maximal 50 Millibar eingerichtet. In einigen Fällen genügen auch geringere Unterdrücke von bspw. 20 Millibar. Das Radialgebläse stellt eine einfache und kostengünstige Möglichkeit zur Unterdruckerzeugung dar. Alternativen sind jedoch möglich, z.B. in Form von Druckluft betriebenen Strahlpumpen.

Der Innenraum 4 ist über eine Leitung 15 mit einer Kompressoreinheit 16 verbunden, die zu der Erzeugung von Druckluft dient. Anstelle der Kompressoreinheit 16 kann auch ein Anschluss an ein vorhandenes Druckluftnetz vorgesehen sein. In der Leitung 15 ist ein Regulierventil 17 angeordnet, das über eine Stelleinrichtung 18 bspw. einen Stellmotor an die Steuereinrichtung 14 angeschlossen ist. Die Kompressoreinheit 16 und das Regulierventil 17 bilden eine Einrichtung 19 zur Beeinflussung des Innendrucks p_{I} in dem Reifen 3.

Die Einrichtung 13 und die Einrichtung 19 bilden insgesamt eine Belastungseinrichtung 20, die dazu dient, den Reifen 3 in wenigstens zwei unterschiedliche Belastungszustände zu überführen.

Zur Erfassung von sich daraus ergebenden Verformungen ist eine Einrichtung 21 vorgesehen, zu der eine Beleuchtungseinrichtung 22 und eine Bildaufnahmeeinrichtung 23, bspw. eine CCD-Kamera gehören. Die Beleuchtungseinrichtung ist bei einer vorteilshaften Ausführungsform eine lichtstarke Lichtquelle für farbiges oder weißes nicht kohärentes Licht. Beispielsweise gehört zu der Beleuchtungseinrichtung eine Gruppe von Weißlicht-Leuchtdioden, eine Leuchtstofflampe, eine Glühlampe oder eine anderweitige Lampe als Lichtquelle. Eine entsprechende Spiegel- und/oder Linsenoptik ist dazu vorgesehen, das von der Lichtquelle erzeugte Licht auf den zu untersuchenden Bereich des Reifens 3, insbesondere seine Seitenwand oder einen Ausschnitt derselben zu richten. Die Bildaufnahmeeinrichtung 23 ist so ausgerichtet, dass sie insbesondere den beleuchteten Teil des Reifens 3 beobachtet.

Die Einrichtung 21 kann ortsfest angeordnet sein, wenn der Reifen z.B. mittels der Halteeinrichtung 5 schrittweise durch das Gesichtsfeld der Bildaufnahmeeinrichtung 23 bewegt wird. Alternativ kann der Reifen 3 ortsfest gelagert sein und die Bildaufnahmeeinrichtung 23 bewegt werden. Es ist auch möglich, insbesondere wenn das Gesichtfeld der Bildaufnahmeeinrichtung 23 kleiner ist als die Radialerstreckung der Seitenwand des Reifens 3, die Bildaufnahmeeinrichtung 23 in Radialrichtung zu bewegen und den Reifen 3 zu drehen.

An die Bildaufnahmeeinrichtung 23 sowie ggf. auch an die Beleuchtungseinrichtung 22 ist eine Auswerteeinrichtung 24 angeschlossen, die dazu eingerichtet ist, die von der Bildaufnahmeeinrichtung 23 gelieferten Bilder zu vergleichen und auszuwerten. Die Auswerteeinrichtung 24 wird bspw. durch einen Computer (PC) und das auf diesem installierte Programm oder Programmsystem gebildet. Zu der Auswerteeinrichtung 24 gehört ein Eingabegerät 25, wie bspw. eine Tastatur und. ein Anzeigegerät 26, wie bspw. ein Monitor.

Die Auswerteeinrichtung 24 kann bedarfsweise mit der Steuereinrichtung 14 verbunden oder mit dieser zu einer Auswerte- und Steuereinrichtung vereinigt sein. Diese kann wiederum durch einen handelsüblichen Computer (PC) mit darauf installiertem entsprechenden Programm oder Programmsystem gebildet sein.

Zur Erfassung und Überwachung der in dem Innenraum 4 und in der Kammer 9 herrschenden Drücke können entsprechende Drucksensoren 27, 28 vorgesehen und mit der Steuereinrichtung 14 verbunden sein. Während der Drucksensor 27 mit dem Innenraum 9 oder der Leitung 11 verbunden ist, ist der Drucksensor 28 mit der Leitung 15 verbunden. Der zu dem Innenraum 4 führende Teil der Leitung 15 ist über das Regulierventil 17 gesteuert mit Druck beaufschlagt. Der Drucksensor 28 ist in diesem Bereich der Leitung 15 angeordnet. Zusätzlich kann hier ein nicht weiter veranschaulichtes Ablassventil vorgesehen sein, um den Innendruck p_{I} des Innenraums 4 gesteuert abzusenken.

Die insoweit beschriebene Prüfeinrichtung 1 arbeitet wie folgt:

Zum Prüfen des Reifens 3 auf Defekte wird dieser mit seiner Felge 2 in die Kammer 9 gebracht und in dieser gelagert. Nach Schließen der Abdeckhaube 8 erfasst der Drucksensor 27 den Außendruck, der in der Kammer 9 herrscht. Dieser stimmt zunächst mit dem Umgebungsluftdruck überein.

Die Leitung 15 ist an das Füllventil der Felge 2 angeschlossen. Das Füllventil steht dabei offen. Das Regulierventil 17 ist zunächst geschlossen. Der Teil der Leitung 15, der sich zwischen dem Füllventil der Felge 2 und dem Regulierventil 17 erstreckt, steht somit unter einem Druck, der dem Reifeninnendruck (Innendruck p_{I}) entspricht. Der Drucksensor 28 erfasst diesen Druck und liefert ein entsprechendes Signal an die Steuereinrichtung 14.

Ist der vorhandene Innendruck p_{I} des Reifens 3 nicht in einem vorgegebenen Bereich, reguliert die Steuereinrichtung 14 zunächst den Reifeninnendruck. Beispielsweise ist ein vorgegebener Druckbereich (A-B, Fig. 2) zwischen 1 Bar und 3 Bar Überdruck festgelegt. Ist der Innendruck p_{I} zu gering, wird das Regulierventil 17 kurzzeitig geöffnet bis der Innendruck in dem gewünschten Bereich liegt. Ist er hingegen zu groß, wird Druck abgelassen. Dies kann manuell oder über eine nicht weiter veranschaulichte Ablassvorrichtung geschehen. Der zulässige Druckbereich kann reifenspezifisch festgelegt sein.

Ist der Innendruck p_{I} des Innenraums 4 innerhalb des vorgegebenen Bereichs und der Außendruck p_{A} in der Kammer 9 gleich dem Umgebungsluftdruck kann die Messung beginnen. In dem in Fig. 2 veranschaulichten Diagramm ist dies zu einem Zeitpunkt t₀ veranschaulicht. Der Innendruck p_{I1} liegt zwischen den Zulässigkeitsgrenzen A und B und der Außendruck p_{A1} entspricht dem Umgebungsluftdruck. Diese Drücke stellen einen ersten Belastungsfall dar, bei dem der Reifen seine Ausgangsform aufweist. Diese wird durch die Einrichtung 21 erfasst und in Form eines zugehörigen Kamerabilds abgespeichert. Das Kamerabild besteht dabei aus einer Zuordnung von jeweils einem Grauwert I(x, y) für jeden Pixel P_{x,y}. Die Grauwerte I(x, y) ergeben sich anhand der stochastischen Oberflächenstruktur des Reifens im Rahmen seiner Oberflächenrauheit.

Zur Erfassung von Fehlstellen schaltet die Steuereinrichtung 14 nun die Saugpumpe 12 an, um den Außendruck p_{A} von dem Wert p_{A1} auf den Wert p_{A2} abzusenken. Zugleich oder zeitlich versetzt steuert die Steuereinrichtung 14 das Regulierventil 17 an, um den Innendruck p_{I} von dem Wert p_{I1} auf den Wert p_{I2} zu erhöhen. Beides ist zu dem Zeitpunkt t₂ in dem Diagramm gemäß Fig. 2 erreicht. Zu dem Zeitpunkt t₂ liegt somit der zweite Belastungsfall vor, in dem der Reifen durch den abgesenkten Außendruck und den erhöhten Innendruck etwas deformiert ist. Die Deformation des Reifens 3 hat eine Verzerrung des von der Bildaufnahmeeinrichtung 23 erfassten Bilds zur Folge. Mit anderen Worten, von den einzelnen durch die Mikrorauheit der Reifenoberfläche erzeugten unterschiedlichen Grauwerten I(x, y) der Pixel P_{x,y} haben sich zumindest einige mehr oder weniger verändert. Die Veränderung kann als Verschiebung der Grauwertbereiche in der Bildfläche und teilweise als Verzerrung der Grauwertbereiche erfasst werden. Dieses Bild wird von der Auswerteeinrichtung 24 mit dem zuvor aufgenommenen Bild verglichen. Aus der Verschiebung der Grauwertbereiche wird die Verformung des Prüflings (Reifens 3) ermittelt. Dies kann bspw. nach folgendem Algorithmus erfolgen:

Die Auswerteeinrichtung 24 bestimmt in dem zuerst aufgenommenen Bild jeweils zusammenhängende Bereiche gleichen Grauwerts. Haben mehrere benachbarte Pixel P_{x,y} den gleichen Grauwert, werden sie zu einem Grauwertbereich zusammengefasst. Haben benachbarte Pixel p_{x,y} verschiedene Grauwerte, gehören sie zu verschiedenen Grauwertbereichen. Der kleinstmögliche Grauwertbereich hat die Größe eines Pixels. Die gleiche Operation wird an dem nachfolgend aufgenommenen Bild des zweiten Belastungsfalls vorgenommen. Unverformte und nicht verlagerte Bereiche der Reifenoberfläche werden nun daran erkannt, dass die Größe und Verteilung der Grauwertbereiche mit der Größe und der Verteilung der Grauwertbereiche des zuvor aufgenommenen Bilds übereinstimmt. Bei verformten Bereichen nimmt die Übereinstimmung ab. Die entsprechenden Grauwertbereiche sind verzerrt und/oder verschoben.

Zur Bildauswertung können die beiden aufgenommenen Bilder auf Kreuzkorrelation untersucht werden. Unverzerrte und unverschobene Bildteile zeigen eine Kreuzkorrelation von nahezu 1. Mit zunehmender Verformung nimmt die Korrelation der entsprechenden Grauwertbereiche oder Pixel der beiden Bilder untereinander ab.

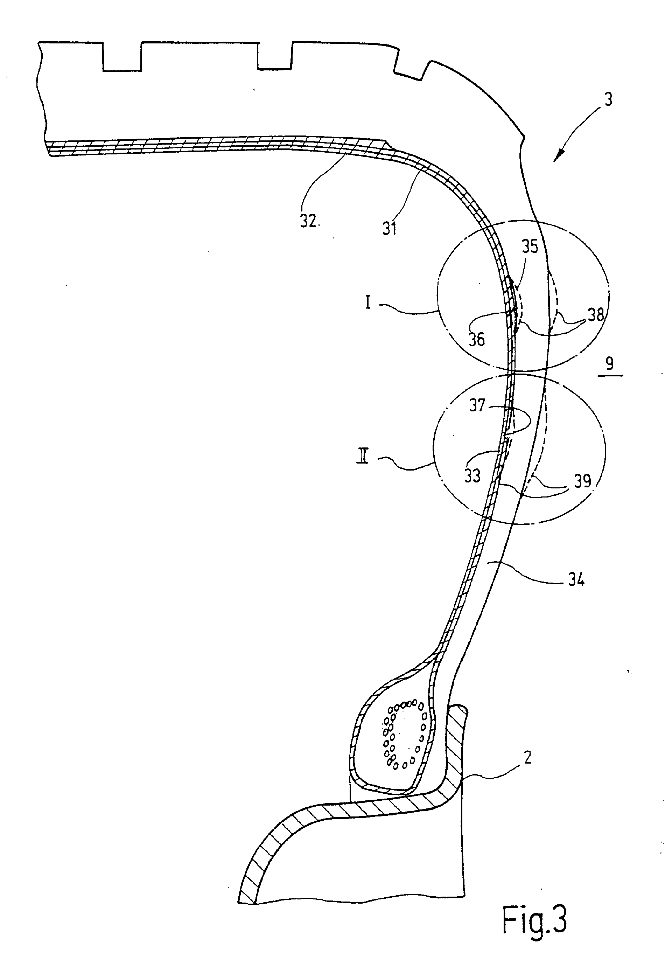

Verformte Bereiche sind somit eindeutig erfassbar und zeigen Fehlstellen an, wenn die Verformung größer ist als die Reifenverformung in der Umgebung. Dies ist in Fig. 3 veranschaulicht:

Der Reifen in Fig. 3 weist eine Karkasse 31 auf, die durch ein textiles Gewebe gebildet ist. Die Karkasse 31 erstreckt sich über die gesamte Innenseite des Reifens 3. Sie ist hier lediglich mit einer dünnen Gummihaut 32 zum luftdichten Abschluss des Reifens 3 nach außen versehen. Die Karkasse 31 wird durch ein Gewebe einzelner Fäden 33 gebildet. Auf die Karkasse 33 ist an der Seitenwand des Reifens eine Gummiauflage 34 aufgebracht. Die Karkasse 31 und die Gummiauflage 34 sind stoffschlüssig miteinander verbunden (vulkanisiert).

In Fig. 3 ist in einem eingekreisten Bereich I eine Laminierungsfehlstelle 35 veranschaulicht. In dieser ist die Gummiauflage 34 nicht fest mit der Karkasse 31 verbunden und es ist ein Spalt 36 zwischen der Karkasse 31 und der Gummiauflage 34 gebildet. Dieser Spalt 36 enthält in der Regel wenigstens geringe Luftmengen.

In einem anderen Bereich II ist ein Karkassenbruch angedeutet. Der Faden 33 weist eine Rissstelle 37 auf. An der Rissstelle 37 ist die Steifigkeit und die Zugfestigkeit der Karkasse 31 im Vergleich zu der sonstigen gesunden Karkasse 31 vermindert.

Bei dem erfindungsgemäßen Messverfahren wird der Außendruck p_{A} in der Kammer 9 gesenkt, wodurch der auf der Gummiauflage 34 lastende Druck abnimmt. Dadurch kann die in dem Spalt 36 vorhandene Luft expandieren und an der Reifenaußenseite eine Verformung hervorrufen. Dies ist in dem Bereich I durch gestrichelte Linien 38 veranschaulicht. Die entsprechende Aufwölbung wird durch das geschilderte optische Messverfahren oder ein alternatives bspw. interferometrisches Messverfahren (Shearografie) sichtbar gemacht.

Die Erhöhung des Innendrucks, die bei dem erfindungsgemäßen Messverfahren vorgesehen ist, beeinflusst hingegen die Aufwölbung in dem Bereich I kaum oder gar nicht. Die hier intakte Karkasse 31 verhindert eine nennenswerte Formänderung. Jedoch bewirkt die Erhöhung des Innendrucks p_{I} eine Deformation des Reifens 3 in dem Bereich II. Hier bewirkt die Rissstelle 37 eine Schwächung der Steifigkeit, insbesondere auch der Zugfestigkeit der Karkasse 31, wodurch der Reifen 3 lokal gedehnt wird und hier an seiner Außenseite die durch gestrichelte Linien 39 veranschaulichte Aufwölbung zeigt. Die Absenkung des Außendrucks kann eine solche Aufwölbung wegen der geringen, damit einhergehenden Kräfte nicht oder nur unzureichend bewirken. Die Erhöhung des Innendrucks p_{I} kann jedoch auf einfache Weise so groß gemacht werden, dass sich eine deutliche Aufwölbung ergibt, die mit den entsprechenden interferometrischen oder anderen optischen Messverfahren erfassbar ist.

Die Bereiche I und II Zeigen unterschiedliche Fehlertypen. In dem Bereich I ist ein Laminierungsfehler zu erkennen, der insbesondere durch Senkung des Außendrucks p_{A} erfassbar wird. In dem Bereich II ist ein Strukturdefekt des Reifens 3 veranschaulicht, der in erster Linie durch Erhöhung des Reifeninnendrucks p_{A} sichtbar gemacht wird. Beide Druckänderungen können gleichzeitig vorgenommen werden (Zeitpunkt t₂ in Fig. 2) um eine maximale Druckdifferenz Δp zu erhalten. Die entsprechenden Fehlstellen können jedoch auch zeitlich versetzt ausfindig gemacht werden, indem, wie in Fig. 2 veranschaulicht, bspw. zu den Zeitpunkten t₁ und t₃ gemessen wird. Dadurch wird es möglich, Laminierungsfehler (Bereich I) und Strukturdefekte (Bereich II) voneinander zu trennen und separat zu erfassen.

Die erfindungsgemäße Prüfeinrichtung für elastische Hohlkörper, wie Reifen 3 oder dgl. ist dazu eingerichtet, die Reifen oder anderweitigen Hohlkörper auf Fehler verschiedener Fehlerklassen zu prüfen. Reifen 3 können dabei auf ihrer Felge 2 verbleiben. Der Innenraum 4 des Reifens steht unter Überdruck oder wird mit einem solchen beaufschlagt. Um den Reifen zu prüfen, wird er in einem Belastungstest zwei unterschiedlichen Belastungen unterworfen. In einer ersten Belastungsstufe werden ein Reifeninnendruck und ein Außendruck eingestellt, die eine erste Druckdifferenz Δp ergeben. In einer zweiten Belastung werden der Reifeninnendruck und der Reifenaußendruck-so verändert, dass die Druckdifferenz Δp2 gegenüber der ersten Druckdifferenz Δp1 deutlich verändert ist. Weil sowohl der Reifeninnendruck als auch der Reifenaußendruck verändert werden, ergeben sowohl Laminierungsdefekte als auch Strukturdefekte Verformungen der Reifenoberfläche. Diese werden mit einer geeigneten Messeinrichtung, bspw. mit einem interferometrischen oder sonstigen optischen Messkopf 23 erfasst.

## Patentansprüche

1. Prüfeinrichtung (1) für hohle, elastische Gegenstände, insbesondere Reifen,
mit einer Einrichtung (2) zur Lagerung des Gegenstandes (3) unter Abschluss seines Innenraums (4),
mit einer Kammer (9) zur Aufnahme des Gegenstandes (3),
mit einer Einrichtung (12) zur Beeinflussung des Kammerdrucks (p_{A}) in der Kammer (9),
mit einer Einrichtung (19) zur Beeinflussung des Innendrucks (p_{I}) in dem Gegenstand (3),
mit einer Steuereinrichtung (14), die die Einrichtung (12) zur Beeinflussung des Kammerdrucks (p_{A}) und die Einrichtung (19) zur Beeinflussung des Innendrucks (p_{I}) des Gegenstands (3) derart steuert, dass sich die Differenz (Δp) aus dem Kammerdruck (p_{A}) und dem Innendruck (p_{I}) ändert, und
mit einer Einrichtung (21) zur Erfassung der sich an dem Gegenstand (3) in Folge der Veränderung des Kammerdrucks (p_{I}) und in Folge der Veränderung des Innendrucks (p_{I}) des Gegenstandes (3) einstellenden Verformung desselben.

2. Prüfeinrichtung nach Anspruch 1, **dadurch gekennzeichnet, dass** die Steuereinrichtung (14) den Kammerdruck (p_{A}) und den Innendruck (p_{I}) gegensinnig beeinflusst.

3. Prüfeinrichtung nach Anspruch 1, **dadurch gekennzeichnet, dass** die Steuereinrichtung (14) den Innendruck (p_{I}) über einen Umgebungsdruckwert (p_{A1}) einstellt.

4. Prüfeinrichtung nach Anspruch 1, **dadurch gekennzeichnet, dass** die Steuereinrichtung zur Erfassung der Verformung des Gegenstands (3) den Kammerdruck (p_{A}) absenkt und den Innendruck (p_{I}) des Gegenstands (3) erhöht.

5. Prüfeinrichtung nach Anspruch 1, **dadurch gekennzeichnet, dass** die Steuereinrichtung (14) den Kammerdruck (p_{A}) und den Innendruck (p_{I}) nacheinander ändert.

6. Prüfeinrichtung nach Anspruch 1, **dadurch gekennzeichnet, dass** die Steuereinrichtung (14) den Kammerdruck (p_{A}) und den Innendruck (p_{I}) zeitlich überlappend ändert.

7. Prüfeinrichtung nach Anspruch 1, **dadurch gekennzeichnet, dass** die Steuereinrichtung (14) den Kammerdruck (p_{A}) und den Innendruck (p_{I}) gleichzeitig ändert.

8. Prüfeinrichtung nach Anspruch 1, **dadurch gekennzeichnet, dass** die Einrichtung (21) zur Erfassung der sich an dem Gegenstand (3) bei Druckänderungen ergebenden Verformung eine optische Einrichtung (21) ist.

9. Prüfeinrichtung nach Anspruch 1, **dadurch gekennzeichnet, dass** die Einrichtung (21) zur Erfassung der sich an dem Gegenstand (21) bei Druckänderungen ergebenden Verformung eine interferenzoptische Einrichtung ist und eine Einrichtung zur Erzeugung von kohärentem Licht aufweist.

10. Prüfeinrichtung nach Anspruch 1, **dadurch gekennzeichnet, dass** die Einrichtung (21) zur Erfassung der sich an dem Gegenstand (21) bei Druckänderungen ergebenden Verformung eine Beleuchtungseinrichtung zur Erzeugung von strukturiertem Licht aufweist.

11. Prüfeinrichtung nach Anspruch 1, **dadurch gekennzeichnet, dass** die Einrichtung (21) zur Erfassung der sich an dem Gegenstand (3) bei Druckänderungen ergebenden Verformung eine Beleuchtungseinrichtung (22) und eine Bildauswerteeinrichtung (24) mit einer Bilderfassungseinrichtung (23) aufweist, wobei die Bildauswerteeinrichtung (24) aus den Grauwerten I(x,y) der Bildpunkte P_{x,y} durch Vergleich der Grauwerte I(x,y) bei unterschiedlichen Drücken die Verformung des Gegenstands (3) bestimmt.

12. Prüfeinrichtung nach Anspruch 11, **dadurch gekennzeichnet, dass** die Bildauswerteeinrichtung (24) Grauwertbereiche und deren Verlagerung bei Druckänderung bestimmt und daraus die Verformung des Gegenstands (3) ermittelt.

13. Prüfeinrichtung nach Anspruch 1, **dadurch gekennzeichnet, dass** der Gegenstand (3) ein Reifen ist und dass die Einrichtung (2) zur Lagerung des Gegenstandes (3) unter Abschluss seines Innenraums (4) eine Felge ist, auf der der Reifen montiert ist.

14. Prüfeinrichtung nach Anspruch 1, **dadurch gekennzeichnet, dass** der Gegenstand (3) ein Reifen ist und dass die Einrichtung (2) zur Lagerung des Gegenstandes (3) unter Abschluss seines Innenraums (4) eine mehrteilige Aufnahmeeinrichtung ist, auf der der Reifen montierbar ist.

15. Prüfverfahren für hohle, elastische Gegenstände, insbesondere Reifen, wobei zu dem Verfahren gehört,
dass der Gegenstand (3) unter Abschluss seines Innenraums (4) gelagert und sein Innendruck (p_{I}) in einer Richtung geändert wird,
dass der Außendruck (p_{A}) des Gegenstands (3) in einer anderen Richtung entgegengesetzt zu der Änderung des Innendrucks (p_{I}) variiert wird
dass die sich durch die Druckänderungen ergebenden Verformungen des Gegenstands (3) erfasst und angezeigt werden.

16. Prüfverfahren nach Anspruch 15, **dadurch gekennzeichnet, dass** der Innendruck (p_{I}) größer gewählt wird als ein Umgebungsdruckwert (p_{A}).

17. Prüfverfahren nach Anspruch 15, **dadurch gekennzeichnet, dass** der Außendruck (p_{A}) auf einen Wert eingestellt wird, der geringer ist als ein Umgebungsdruckwert (p_{A1}).

18. Prüfverfahren nach Anspruch 15, **dadurch gekennzeichnet, dass** die der Außendruck (p_{A}) und der Innendruck (p_{I}) nacheinander geändert werden.

19. Prüfverfahren nach Anspruch 15, **dadurch gekennzeichnet, dass** die der Außendruck (p_{A}) und der Innendruck (p_{I}) zeitlich überlappend geändert werden.

20. Prüfverfahren nach Anspruch 15, **dadurch gekennzeichnet, dass** der Außendruck (p_{A}) und der Innendruck (p_{I}) gleichzeitig geändert werden.

21. Prüfverfahren nach Anspruch 15, **dadurch gekennzeichnet, dass** der Außendruck (p_{A}) und der Innendruck (p_{I}) um unterschiedliche Beträge geändert werden.

22. Prüfverfahren nach Anspruch 15, **dadurch gekennzeichnet, dass** der Außendruck (p_{A}) um einen geringeren Betrag geändert wird als der Innendruck (p_{I}).

23. Prüfverfahren nach Anspruch 15, **dadurch gekennzeichnet, dass** die sich an dem Gegenstand (3) einstellende Verformung optisch erfasst wird.
